# EUROPÄISCHE PATENTSCHRIFT

(11) **EP 2 676 160 B1**
(45) Veröffentlichungstag und Bekanntmachung des Hinweises auf die Patenterteilung: **15.05.2019**
(21) Anmeldenummer: 12714832.8
(22) Anmeldetag: 10.02.2012
(51) Int. Cl.: G02B 6/38

(54) **FASEROPTISCHE VERBINDUNGSANORDNUNG UND ADAPTERHÜLSE**
FIBRE-OPTIC CONNECTING ARRANGEMENT AND ADAPTER SLEEVE
DISPOSITIF DE RACCORDEMENT OPTIQUE ET DOUILLE D'ADAPTATEUR

(30) Priorität: 17.02.2011 DE 102011011523
(43) Veröffentlichungstag der Anmeldung: 25.12.2013
(73) Patentinhaber: CommScope Technologies LLC, Hickory, NC 28602 (US)
(72) Erfinder: BUSSE, Ralf-Dieter, 15366 Hoppegarten (DE); KRAFT, Wolfgang, 12103 Berlin (DE)
(74) Vertreter: Zucker, Volker
(86) Internationale Anmeldenummer: PCT/IB2012/000255
(87) Internationale Veröffentlichungsnummer: WO 2012/110876

(56) Entgegenhaltungen:
- GB-A- 2 062 283
- US-A- 4 493 529
- US-A1- 2005 041 928

## Beschreibung

Die Erfindung betrifft eine faseroptische Verbindungsanordnung und eine Adapterhülse. Die Erfindung ist in den beigefügten Ansprüchen definiert.

Aus der US 7,744 288 B2 ist ein faseroptischer Adapter bekannt. Der faseroptische Adapter dient einer Verbindung eines ersten Glasfaserkabels mit einem ersten Anschluss- oder Endstecker und einem zweiten Glasfaserkabel mit einem zweiten Anschluss- oder Endstecker, wobei der erste Anschluss- oder Endstecker von dem zweiten Anschluss- oder Endstecker verschieden ist. Hierdurch können Glasfaserkabel, die mit verschiedenartigen Steckertypen terminiert sind, verbunden werden.

Hierzu weist der faseroptische Adapter eine erste Anschlusseinrichtung für den ersten Anschluss- oder Endstecker und eine zweite Anschlusseinrichtung für den zweiten Anschluss- oder Endstecker auf. Aufgrund der Verschiedenartigkeit des ersten und des zweiten Anschluss- oder Endsteckers sind auch die erste und die zweite Anschlusseinrichtung verschiedenartig ausgebildet.

insbesondere kann der in der US 7,744,288 B2 vorgeschlagene faseroptische Adapter zur Verbindung eines externen Glasfaserkabels mit einem internen Glasfaserkabel dienen. Hierbei bezeichnet ein externes Glasfaserkabel ein Glasfaserkabel, welches in einem Außenbereich verlegt ist und z. B. Umwelteinflüssen, wie z. B. wechselnden Wetterbedingungen, Feuchtigkeit, Schmutz und weiteren Umwelteinflüssen, ausgesetzt ist. Im Gegensatz hierzu bezeichnet ein internes Glasfaserkabel ein Kabel, welches in einem Innenbereich verlegt ist und derartigen Umwelteinflüssen nicht oder nur in einem geringen Maße ausgesetzt ist. Dementsprechend unterscheiden sich Anforderungen an und Eigenschaften von internen und externen Kabeln.

Insbesondere kann der faseroptische Adapter eine erste Anschlusseinrichtung für einen so genannten widerstandsfähigen Anschlussstecker, beispielsweise einen sogenannten DLX™-Stecker, aufweisen. Derartige Anschlussstecker sind für eine Benutzung in einem Außenbereich, z.B. außerhalb von Gebäuden, also für eine Außennutzung, ausgelegt. Hierbei können der widerstandsfähige Anschlussstecker und die erste Anschlusseinrichtung derart ausgebildet sein, dass der faseroptische Adapter eine fluiddichte Verbindung zwischen einem in einem Außenbereich verlegten externen Glasfaserkabel und einem in einem Innenbereich verlegten internen Glasfaserkabel ermöglicht. Vorzugsweise können derartige faseroptische Adapter also im Bereich von Übergängen von einem Außen- zu einem Innenbereich, beispielsweise im Bereich von Hauswanddurchlässen, verwendet werden.

Nachteilig ist hierbei jedoch, dass bisher eine Abdichtung nur gegenüber einem äußeren Umfeld, also im Bereich der ersten Anschlusseinrichtung angeordnet ist, da die zweite Anschlusseinrichtung bei der vorhergehend geschilderten Verwendung des faseroptischen Adapters in der Regel in einem Innenbereich angeordnet ist und somit keinen oder minimalen äußeren Umwelteinflüssen, wie z. B. Feuchtigkeit, ausgesetzt ist. Weiter ergibt sich nachteilig, dass mittels des bekannten faseroptischen Adapters nur verschiedenartige Anschluss- oder Endstecker verbindbar sind. So ist es beispielsweise derzeit nicht möglich, zwei Glasfaserkabel mit gleichartigen Anschluss- oder Endsteckern sicher zu verbinden.

Es stellt sich das technische Problem, eine faseroptische Verbindungsanordnung und eine Adapterhülse zu schaffen, welche eine gegenüber Umwelteinflüssen geschützte Verbindung von verschieden- oder gleichartigen Anschluss- oder Endsteckern von Glasfaserkabeln ermöglicht, wobei ein Design eines faseroptischen Adapters zur Verbindung zweier verschiedenartiger Anschluss- oder Endstecker ausgerüsteter Glasfaserkabel nicht verändert werden soll.

Die Lösung des technischen Problems ergibt sich durch die Gegenstände mit den Merkmalen der Ansprüche 1-6.

Vorgeschlagen wird eine faseroptische Verbindungsanordnung. Die Verbindungsanordnung umfasst einen faseroptischen Adapter, wie er z. B. in der US 7,744, 288 B2 beschrieben ist. Insbesondere weist der faseroptische Adapter eine erste Anschlusseinrichtung für einen ersten Anschlussstecker und eine zweite Anschlusseinrichtung für einen zweiten Anschlussstecker auf. Eine Anschlusseinrichtung dient hierbei einer mechanischen Fixierung und/oder Ausrichtung eines Anschlusssteckers, der ein Glasfaserkabel terminiert. Hierzu kann eine Anschlusseinrichtung beispielsweise geeignete Befestigungsmittel, z. B. Rast-, Klemm- und/oder Verschraubelemente aufweisen. Alternativ oder kumulativ kann die Anschlusseinrichtung Führungsmittel, wie z. B. Führungsnuten, Führungsstege, Führungsschlipse und Führungswände, aufweisen. Insbesondere kann der faseroptische Adapter einer Verbindung eines externen Glasfaserkabels und eines internen Glasfaserkabels dienen. Hierzu kann der faseroptische Adapter einen Außen- und einen Innenabschnitt aufweisen, wobei ein Außenabschnitt derart ausgelegt und ausgebildet ist, dass er aus äußeren Umwelteinflüssen resultierende Anforderungen erfüllt und in einem Außenbereich anordenbar ist. Der Innenabschnitt kann hierbei derart ausgelegt und ausgebildet sein, dass er in einem Innenbereich, der keinen oder nur reduzierten äußeren Umwelteinflüssen ausgesetzt ist, anordenbar ist. Hierbei kann der Außenabschnitt die erste Anschlusseinrichtung und der Innenabschnitt die zweite Anschlusseinrichtung aufweisen. In die erste Anschlusseinrichtung kann hierbei vorzugsweise ein widerstandsfähiger Anschlussstecker einsteckbar sein. Ein derartiger widerstandsfähiger Anschlussstecker ist ebenfalls in der US 7,744,288 B2 beschrieben. Hierbei können Dichtungsmittel derart in oder an der ersten Anschlusseinrichtung und/oder an dem widerstandsfähigen Anschlussstecker angeordnet sein, dass bei einer Verbindung des widerstandsfähigen Anschlusssteckers mit der ersten Anschlusseinrichtung der faseroptische Adapter im Bereich der ersten Anschlusseinrichtung gegenüber äußeren Umwelteinflüssen, insbesondere Feuchtigkeit, abgedichtet ist. Somit ist ein Eindringen von Feuchtigkeit durch die erste Anschlusseinrichtung des faseroptischen Adapters von einem Außenbereich her ausgeschlossen oder minimiert.

Weiter sind die erste und die zweite Anschlusseinrichtung verschieden oder verschiedenartig ausgebildet. Somit dient der faseroptische Adapter einer Verbindung von zwei mit verschiedenartig ausgebildeten Anschluss- oder Endsteckern terminierten Glasfaserkabeln.

Der faseroptische Adapter weist mindestens ein erstes adapterseitiges Befestigungsmittel auf. Das erste adapterseitige Befestigungsmittel ist hierbei nicht Element einer Anschlusseinrichtung. Das erste adapterseitige Befestigungsmittel ist als Außengewinde mit einem ersten adapterseitigen Nenndurchmesser ausgebildet. Das Außengewinde kann hierbei auf einem Teil einer Außenfläche oder eines Außenmantels des faseroptischen Adapters angeordnet sein. Mittels des Außengewindes kann beispielsweise eine Aufschiebe- oder Befestigungsmutter auf den faseroptischen Adapter aufgeschraubt werden. Diese Aufschiebe- oder Befestigungsmutter kann für eine mechanische Fixierung des faseroptischen Adapters an einer Adapterhalterung genutzt werden (siehe US 7,744,288 B2).

Erfindungsgemäß umfasst die Verbindungsanordnung weiter eine Adapterhülse. Die Adapterhülse weist einen ersten Endabschnitt mit einer ersten Öffnung und einen zweiten Endabschnitt mit einer zweiten Öffnung auf. Weiter weist die Adapterhülse ein Innenvolumen auf, welches durch erste und die zweite Öffnung zugänglich ist. Die Adapterhülse kann zumindest teilweise hohlzylinderförmig ausgebildet sein. Insbesondere kann die erste Öffnung in einer Deckelfläche des Hohlzylinders und/oder die zweite Öffnung in einer Grundfläche des Hohlzylinders angeordnet sein.

Hierbei kann jedoch der erste und/oder der zweite Endabschnitt von einer idealen Hohlzylinderform abweichen.

Der erste Endabschnitt weist ein erstes hülsenseitiges Befestigungsmittel auf, wobei das erste hülsenseitige Befestigungsmittel als erstes Innengewinde ausgebildet ist. Das Innengewinde kann hierbei die erste Öffnung umranden. Weiter kann eine zentrale Längsachse des Innengewindes gleich einer zentralen Längsachse der Adapterhülse sein. Ist beispielsweise ein Teil des ersten Endabschnitts hohlzylinderförmig ausgebildet, so kann das Innengewinde an einer Innenfläche des Hohlzylinders angeordnet sein.

Das Innengewinde weist einen ersten hülsenseitigen Nenndurchmesser auf. Der erste hülsenseitige Nenndurchmesser korrespondiert zu dem ersten adapterseitigen Nenndurchmesser, wobei die Adapterhülse derart auf das adapterseitige Außengewinde aufgeschraubt ist, dass zumindest die zweite Anschlusseinrichtung in einem Innenvolumen der Adapterhülse angeordnet ist. Hierbei ragt der faseroptische Adapter zumindest teilweise, vorzugsweise mit dem vorhergehend definierten Innenabschnitt des faseroptischen Adapters, durch die erste Öffnung in das Innenvolumen der Adapterhülse hinein. Die zusammenwirkenden oder wechselwirkenden adapterseitigen Außengewinde und hülsenseitige Innengewinde dienen einer mechanischen Fixierung und Ausrichtung der Adapterhülse bezüglich des faseroptischen Adapters. Auch können durch die Gewinde vorbestimmte Zug- und Druckkräfte, die auf die vorgeschlagene Verbindungsanordnung einwirken, aufgenommen werden.

Ein Innendurchmesser der Adapterhülse bzw. Abmaße des Innenvolumens sind hierbei derart gewählt, dass zumindest ein Teil des faseroptischen Adapters, vorzugsweise der Innenabschnitt, weiter vorzugsweise die zweite Anschlusseinrichtung, vollständig innerhalb der Adapterhülse anordenbar ist.

Durch die zweite Öffnung kann dann ein zweiter Anschlussstecker in das Innenvolumen eingebracht und mit der zweiten Anschlusseinrichtung verbunden werden. Auch ist vorstellbar, dass Dimensionen, insbesondere ein Durchmesser der zweiten Öffnung derart gewählt ist, dass nur ein mit dem zweiten Anschlussstecker terminiertes Glasfaserkabel aus der Adapterhülse herausgeführt werden kann. Hierbei ist auch der zweite Anschlussstecker vollständig im Innenvolumen der Adapterhülse angeordnet oder anordenbar. Insbesondere können Dimensionen, insbesondere ein Durchmesser, der zweiten Öffnung größer oder gleich äußeren Dimensionen, insbesondere größer oder gleich einem Außendurchmesser, des mit dem zweiten Anschlussstecker terminierten Glasfaserkabels, jedoch kleiner als maximale äußere Dimensionen des zweiten Anschlusssteckers gewählt werden. Auch können im Bereich des zweiten Endabschnitts Dichtelemente oder Dichtungsmittel angeordnet sein, die ein fluiddichtes Einstecken, Einbringen oder Einführen des zweiten Anschlusssteckers oder des mit dem zweiten Anschlussstecker terminierten Glasfaserkabels in das Innenvolumen ermöglichen.

Hierdurch ergibt sich in vorteilhafter Weise eine faseroptische Verbindungsanordnung, die eine gegenüber Umwelteinflüssen, insbesondere Feuchtigkeit, geschützte Verbindung von Glasfaserkabeln ermöglicht. Insbesondere ist hierbei auch ein Bereich der zweiten Anschlusseinrichtung, insbesondere ein Innenabschnitt der faseroptischen Adapters, verbessert gegenüber äußeren (Umwelt-) Einflüssen geschützt. Dies ermöglicht in vorteilhafter Weise die Anordnung des die zweite Anschlusseinrichtung aufweisenden Teils des faseroptischen Adapters in Innenbereichen mit höherer Feuchtigkeit, beispielsweise Kellerräume eines Hauses, oder sogar die Anordnung des die zweite Anschlusseinrichtung aufweisenden Teils in einem Außenbereich, also z. B. außerhalb von Häusern. Hierdurch wird ein Einsatzgebiet des faseroptischen Adapters ohne Veränderung eines Designs des faseroptischen Adapters in vorteilhafter Weise vergrößert.

In einer weiteren Ausführungsform weist der zweite Endabschnitt ein zweites hülsenseitiges Befestigungsmittel oder eine hülsenseitige Anschlusseinrichtung auf. Der zweite Endabschnitt kann dem ersten Endabschnitt entlang einer zentralen Längsachse der Adapterhülse gegenüber liegend angeordnet sein. Mittels des zweiten hülsenseitigen Befestigungsmittels oder der hülsenseitigen Anschlusseinrichtung kann ein Anschluss- oder Endstecker eines Glasfaserkabels oder das Glasfaserkabel selbst an der Adapterhülse mechanisch fixiert oder befestigt und/oder in Bezug auf die Adapterhülse ausgerichtet werden. Ist die Adapterhülse, wie vorhergehend geschildert, auf den faseroptischen Adapter aufgeschraubt und somit mechanisch an dem faseroptischen Adapter fixiert und gegenüber dem faseroptischen Adapter in einer vorbestimmten Ausrichtung ausgerichtet, so ergibt sich in vorteilhafter Weise, dass der mittels des zweiten hülseinseitigen Befestigungsmittels oder mittels des hülsenseitigen Anschlusseinrichtung an der Adapterhülse befestigte Anschluss- oder Endstecker oder das mittels des zweiten Befestigungsmittels oder mittels der hülsenseitigen Anschlusseinrichtung an der Adapterhülse befestigte Glasfaserkabel auch mechanisch an dem faseroptischen Adapter fixiert oder befestigt ist und/oder gegenüber dem faseroptischen Adapter, insbesondere gegenüber der zweiten Anschlusseinrichtung, in einer vorbestimmten Ausrichtung ausgerichtet ist. Weiter ergibt sich in vorteilhafter Weise, dass Zug- und/oder Druckkräfte, die auf den Anschluss- oder Endstecker oder das Glasfaserkabel ausgeübt werden, nicht ausschließlich von der zweiten Anschlusseinrichtung aufgenommen werden müssen, sondern zumindest teilweise, vorzugsweise vollständig, von dem zweiten hülsenseitigen Befestigungsmittel oder der hülsenseitigen Anschlusseinrichtung aufgenommen werden.

In einer weiteren Ausführungsform umfasst die Verbindungsanordnung zusätzlich ein Dichtungsmittel, wobei das Dichtungsmittel das Innenvolumen der Adapterhülse im Bereich der ersten Öffnung der Adapterhülse fluiddicht abdichtet. Das Dichtungsmittel kann hierbei also in oder am ersten Endabschnitt der Adapterhülse angeordnet sein, insbesondere anliegen. Hierdurch ergibt sich in vorteilhafter Weise, dass ein Eindringen von Feuchtigkeit durch die erste Öffnung in das Innenvolumen der Adapterhülse verhindert oder minimiert wird.

In einer bevorzugten Ausführungsform bildet der erste Endabschnitt der Adapterhülse eine erste Dichtfläche aus. Die Dichtfläche kann hierbei als Auflagefläche für das vorhergehend erwähnte Dichtungsmittel dienen. Das Dichtungsmittel kann insbesondere ein Dichtungsring sein, der auf der ersten Dichtfläche zumindest teilweise, vorzugsweise vollständig, aufliegt. Die Dichtungsfläche kann hierbei ringförmig ausgebildet sein, wobei die Dichtfläche in einer Ebene angeordnet ist, die senkrecht zu der zentralen Längsachse der Adapterhülse angeordnet ist. Der faseroptische Adapter kann z.B. einen Flansch aufweisen, der z. B. den vorhergehend erläuterten Außenabschnitt des faseroptischen Adapters von dem Innenabschnitt des faseroptischen Adapters trennt. Der Flansch kann hierbei das adapterseitige Außengewinde zu einer Seite hin begrenzen oder abschließen. Insbesondere kann der Flansch an einem in Aufschraubrichtung hinteren Ende des adapterseitigen Außengewindes an dem Adapter angeordnet sein. Wird nun die Adapterhülse mit z. B. im ersten Endabschnitt angeordneten Dichtungsmittel, z. B. mit an oder auf der ersten Dichtfläche aufgelegtem Dichtring auf den faseroptischen Adapter aufgeschraubt, so kann die erste Dichtfläche das Dichtungsmittel, insbesondere den Dichtring, gegen den Flansch andrücken oder anpressen.

In einer weiteren Ausführungsform sind am zweiten Endabschnitt der Adapterhülse Markierungselemente angeordnet. Die Markierungselemente oder das Markierungselement dienen einer korrekten Einführung, Einsteckung oder Einsetzung eines Anschlusssteckers in die Adapterhülse und in die im Innenvolumen der Adapterhülse angeordnete zweite Anschlusseinrichtung. Hierdurch kann in vorteilhafter Weise eine korrekte Ausrichtung des Anschlusssteckers in der zweiten Anschlusseinrichtung unterstützt werden. Hierbei können Gewindegänge des adapterseitigen Außengewindes und des ersten hülsenseitigen Innengewindes derart aufeinander abgestimmt sein, dass die Adapterhülse bei einer vollständigen Aufschraubung auf den faseroptischen Adapter in Bezug auf den faseroptischen Adapter eine vorbestimmte Position einnimmt. Somit ist eine Ausrichtung und Lage der Adapterhülse zum faseroptischen Adapter und somit auch zur zweiten Anschlusseinrichtung ebenfalls vorbestimmt.

Alternativ oder kumulativ kann die Adapterhülse ein Führungsmittel oder mehrere Führungsmittel aufweisen oder können diese Führungsmittel an der Adapterhülse angeordnet sein. Führungsmittel bezeichnen hierbei z. B. körperlich ausgebildete Führungsmittel, wie Führungsschlitze, Führungsnuten, Führungsstege und Führungswände. Vorzugsweise sind das oder die Führungsmittel derart an der Adapterhülse angeordnet, dass ein Anschlussstecker, insbesondere ein Anschlussstecker mit einer vorbestimmten Ausbildung oder Ausprägung, nur in einer vorbestimmten Stellung der Orientierung durch die zweite Öffnung der Adapterhülse in das Innenvolumen der Adapterhülse und somit auch in die zweite Anschlusseinrichtung des faseroptischen Adapters eingesteckt, eingebracht oder eingeführt werden kann. Somit wird in vorteilhafter Weise eine fehlerhafte Einsteckung, Einbringung oder Einsetzung eines Anschlusssteckers bei aufgeschraubter Adapterhülse vermieden oder reduziert.

In einer weiteren Ausführungsform weist der faseroptische Adapter ein zweites adapterseitiges Befestigungsmittel zur Befestigung oder Fixierung des ersten Anschlusssteckers an dem faseroptischen Adapter auf. Das zweite adapterseitige Befestigungsmittel dient somit einer mechanischen Fixierung und gegebenenfalls Ausrichtung eines in die erste Anschlusseinrichtung eingesteckten, eingesetzten oder eingeführten Anschlusssteckers. Hierzu kann, wie in der US 7,744,288 B2 beschrieben, der erste Anschlussstecker zu dem zweiten adapterseitigen Befestigungsmittel korrespondierende Befestigungsmittel aufweisen.

Das zweite hülsenseitige Befestigungsmittel ist ebenfalls zur Befestigung eines ersten Anschlusssteckers an der Adapterhülse ausgebildet. Hierdurch kann an der Adapterhülse, insbesondere am zweiten Endabschnitt der Adapterhülse, ebenfalls ein Anschlussstecker befestigt oder fixiert und gegebenenfalls ausgerichtet werden, der baugleich oder vom selben Typ wie der Anschlussstecker ist, der in die erste Anschlusseinrichtung einsteckbar, einsetzbar oder einführbar ist. Hierdurch kann die vorgeschlagene faseroptische Verbindungsanordnung in vorteilhafter Weise eine mechanische und optische Verbindung zwischen zwei Glasfaserkabeln herstellen, die mit baugleichen Anschlusssteckern terminiert sind. Ist der erste Anschlussstecker z. B. ein widerstandsfähiger Anschlussstecker für ein Gebrauch in einer Außenumgebung, so kann mittels der vorgeschlagenen faseroptischen Verbindungsanordnung ein mit diesem widerstandsfähigen Anschlussstecker terminiertes Glasfaserkabel mit einem weiteren, ebenfalls mit einem derartigen widerstandsfähigen Anschlussstecker terminierten Glasfaserkabel verbunden werden. Somit kann durch Aufschraubung der Adapterhülse und die hierdurch geschaffene faseroptische Verbindungsanordnung der faseroptische Adapter zur Verbindung von Glasfaserkabeln auch in einem Außenbereich und nicht nur im Bereich von Übergängen von einem Außenbereich zu einem Innenbereich genutzt werden. Somit wird ein Einsatzgebiet des faseroptischen Adapters in vorteilhafter Weise erhöht.

Das zweite hülsenseitige Befestigungsmittel kann hierbei derart ausgebildet sein, dass ein mittels des zweiten hülsenseitigen Befestigungsmittels befestigter erster Anschlussstecker mit einer vorbestimmten Lage und Orientierung in der zweiten Anschlusseinrichtung angeordnet, insbesondere in diese eingesetzt, eingesteckt oder eingeführt ist. Die zweite Anschlusseinrichtung ist, wie vorhergehend erläutert, nicht oder nur teilweise zur mechanischen Fixierung und Ausrichtung eines ersten Anschlusssteckers ausgelegt. Um trotzdem eine funktionsfähige faseroptische Verbindung zwischen den mit den beiden gleichartigen Anschlusssteckern terminierten Glasfaserkabeln herzustellen, kann das zweite hülsenseitige Befestigungsmittel nunmehr zumindest teilweise die Funktion der mechanischen Fixierung und Ausrichtung übernehmen, wobei ein mittels des zweiten hülsenseitigen Befestigungsmittels befestigter erster Anschlussstecker beispielsweise derart in die zweite Anschlusseinrichtung des faseroptischen Adapters hineinragen kann, dass eine faseroptische Verbindung hergestellt ist oder werden kann.

In einer bevorzugten Ausführungsform weist der faseroptische Adapter ein zweites adapterseitiges Befestigungsmittel auf, wobei das zweite adapterseitige Befestigungsmittel als Innengewinde mit einem zweiten adapterseitigen Nenndurchmesser ausgebildet ist. Das zweite hülsenseitige Befestigungsmittel ist ebenfalls als Innengewinde mit einem zweiten hülsenseitigen Nenndurchmesser ausgebildet, wobei der adapterseitige Nenndurchmesser gleich dem zweiten hülsenseitigen Nenndurchmesser ist.

Wie US 7,744,288 B2 beschrieben, kann ein erster Anschlussstecker, z. B. ein widerstandsfähiger Anschlussstecker, eine rotierbare Befestigungsmutter aufweisen, die um ein Gehäuse des widerstandsfähigen Anschlusssteckers rotierbar ist. Diese rotierbare Befestigungsmutter kann einen Gewindeabschnitt mit einem Außengewinde aufweisen, wobei das Außengewinde (steckerseitiges Außengewinde) einen Nenndurchmesser aufweist, der zu dem Nenndurchmesser des als Innengewinde ausgebildeten zweiten adapterseitigen Befestigungsmittel korrespondiert. Hierdurch kann der widerstandsfähige Anschlussstecker durch Verschraubung der Befestigungsmutter mit dem faseroptischen Adapter mechanisch fest an dem faseroptischen Adapter befestigt werden.

Weist nun die Adapterhülse, insbesondere am zweiten Endabschnitt der Adapterhülse, ein gleichartig dimensioniertes Innengewinde auf, so kann das steckerseitige Außengewinde eines widerstandsfähigen Anschlusssteckers und somit der Anschlussstecker an sich mit der Adapterhülse verschraubt und somit fest an der Adapterhülse befestigt werden.

In der US 7,744,288 B2 ist beschrieben, dass ein widerstandsfähiger Anschlussstecker auch Dichtungsmittel, insbesondere einen Dichtring, aufweisen kann, der beim Einschrauben des steckerseitigen Außengewindes in das adapterseitige Innengewinde gegen eine Anschlag- oder Anlegefläche, die als Dichtfläche dient, angedrückt wird. Hierdurch wird verhindert, dass Feuchtigkeit von einer Außenseite her durch die erste Anschlusseinrichtung in den faseroptischen Adapter eindringen kann.

Vorzugsweise kann die Adapterhülse im Bereich des zweiten Endabschnitts ebenfalls eine Anlege- oder Anschlagfläche, die als zweite hülsenseitige Dichtfläche dient, aufweisen. Ein Dichtungsmittel, welches z. B. an einem Anschlussstecker, beispielsweise einem widerstandsfähigen Anschlussstecker angeordnet ist, aber auch als separates Bauteil ausgebildet sein kann, kann hierbei beim Einbringen, insbesondere Einschrauben, des Anschlusssteckers in das zweite hülsenseitige Innengewinde zwischen ein Gehäuse des Steckers und die Anschlag- oder Anlegefläche gepresst werden. Ist die Adapterhülse, wie vorhergehend beschrieben, auf den faseroptischen Adapter dichtend aufgeschraubt, so ergibt sich hierdurch in vorteilhafter Weise, dass ein Innenvolumen auch im Bereich der zweiten Öffnung gegenüber Umwelteinflüssen, insbesondere Feuchtigkeit, vollständig oder verbessert abgedichtet ist. Ist auch in die erste Anschlusseinrichtung ein Anschlussstecker dichtend eingebracht, so ist somit in vorteilhafter Weise die faseroptische Verbindung vollständig gegenüber eindringender Feuchtigkeit abgedichtet oder verbessert geschützt.

In einer weiteren Ausführungsform ist die erste Anschlusseinrichtung einer Anschlusseinrichtung für einen sogenannten DLX™-Stecker und/oder die zweite Anschlusseinrichtung eine Anschlusseinrichtung für einen sogenannten SC-Stecker. Insbesondere hinsichtlich der Ausbildung eines DLX™-Steckers wird dabei auf die US 7,744,288 B2 Bezug genommen. Selbstverständlich können die Anschlusseinrichtungen auch Anschlusseinrichtungen für weitere Steckertypen der Glasfaserverbindungstechnik sein. Hierdurch ergibt sich in vorteilhafter Weise, eine einfache Verbindung von Glasfaserkabeln, die mit gleichartigen oder verschiedenartigen Steckertypen, die bereits existieren, terminiert sind.

Weiter vorgeschlagen wird eine Adapterhülse für eine faseroptische Verbindungsanordnung. Die Verbindungsanordnung umfasst einen faseroptischen Adapter, wobei der faseroptische Adapter eine erste Anschlusseinrichtung für einen ersten Anschlussstecker und eine zweite Anschlusseinrichtung für einen Anschlussstecker aufweist. Die erste und die zweite Anschlusseinrichtung sind hierbei verschieden oder verschiedenartig ausgebildet. Der faseroptische Adapter weist mindestens ein erstes adapterseitiges Befestigungsmittel auf, wobei das erste adapterseitige Befestigungsmittel als Außengewinde mit einem ersten adapterseitigen Nenndurchmesser ausgebildet ist.

Erfindungsgemäß weist die Adapterhülse einen ersten Endabschnitt mit einer ersten Öffnung und eine zweiten Endabschnitt mit einer zweiten Öffnung auf. Der erste Endabschnitt weist ein erstes hülsenseitiges Befestigungsmittel auf, wobei das erste hülsenseitige Befestigungsmittel als erstes Innengewinde ausgebildet ist. Das Innengewinde weist einen ersten hülsenseitigen Nenndurchmesser auf, wobei der erste hülsenseitige Nenndurchmesser zu dem ersten adapterseitigen Nenndurchmesser korrespondiert. Die Adapterhülse ist derart auf das adapterseitige Außengewinde aufschraubbar, dass zumindest die zweite Anschlusseinrichtung in einem Innenvolumen der Adapterhülse anordenbar ist.

Das erste Innengewinde kann einen vorbestimmten Nenndurchmesser aufweisen.

Hierdurch ergibt sich in vorteilhafter Weise eine Adapterhülse, mit der eine der vorhergehend beschriebenen faseroptischen Verbindungsanordnungen herstellbar ist.

Selbstverständlich kann die Adapterhülse auch mittels andersartig ausgebildeter Befestigungsmittel an dem faseroptischen Adapter derart angeordnet werden, dass die zweite Anschlusseinrichtung in einem Innenvolumen der Adapterhülse anordenbar ist. Beispielsweise kann die Adapterhülse auch auf den faseroptischen Adapter aufgerastet oder aufgeklemmt werden. Hierzu kann die Adapterhülse geeignete Befestigungsmittel, z. B. Rast- und/oder Klemmelemente, umfassen. Auch kann der faseroptische Adapter derart verändert werden, dass dieser korrespondierende Befestigungselemente, z. B. korrespondierende Rast- und/oder Klemmelemente, aufweist.

Die Erfindung wird anhand eines Ausführungsbeispiels näher erläutert. Die Figuren zeigen:
- Fig. 1: eine Explosionszeichnung einer faseroptischen Verbindungsanordnung (Stand der Technik),
- Fig. 2: eine Explosionszeichnung einer erfindungsgemäßen faseroptischen Verbindungsanordnung,
- Fig. 3: eine perspektivische Ansicht einer faseroptischen Verbindungsanordnung,
- Fig. 4: eine perspektivische Ansicht eines Schnitts, der in Fig. 3 dargestellten faseroptischen Verbindungsanordnung und
- Fig. 5: einen Querschnitt durch die in Fig. 3 dargestellte faseroptische Verbindungsanordnung.

Nachfolgend bezeichnen gleiche Bezugszeichen Elemente mit gleichen oder ähnlichen technischen Eigenschaften.

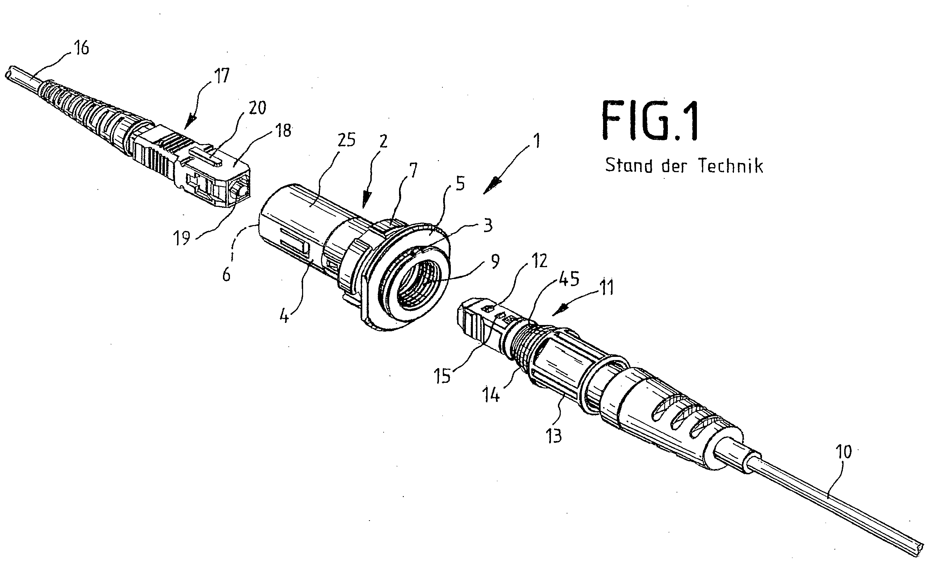

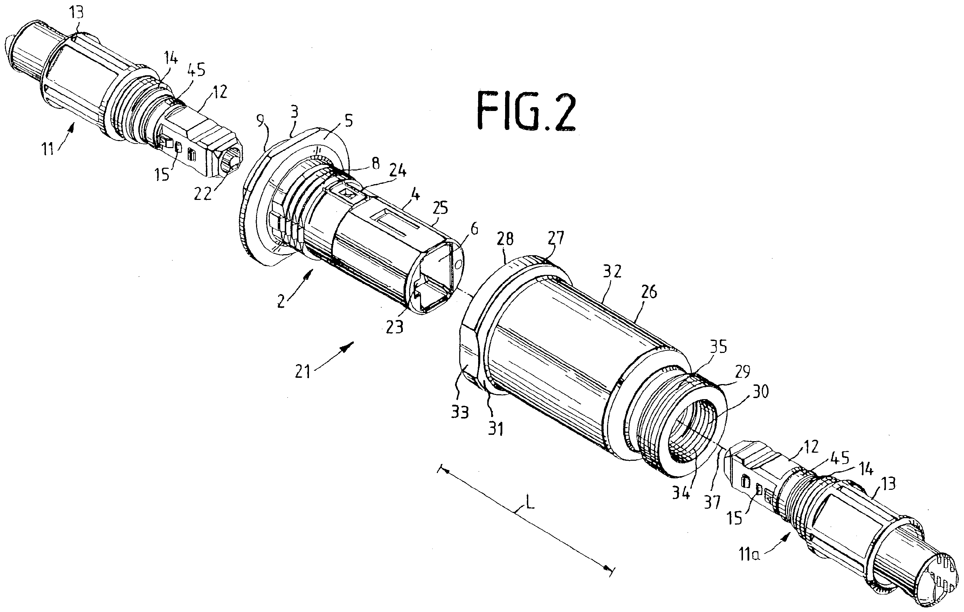

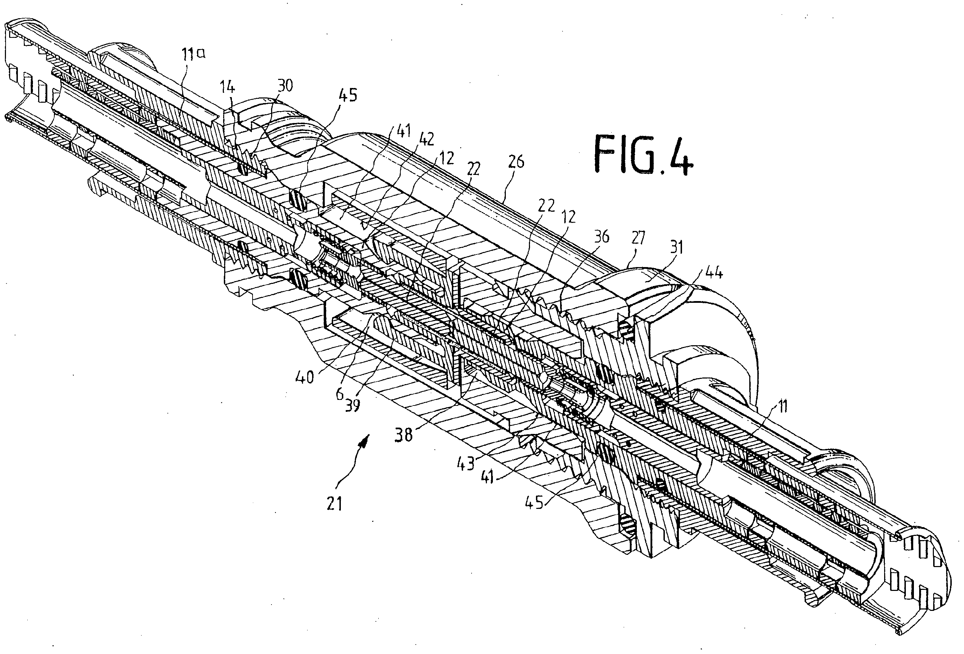

In Fig. 1 ist eine Explosionszeichnung einer faseroptischen Verbindungsanordnung 1 gemäß dem Stand der Technik dargestellt. Die faseroptische Verbindungsanordnung 1 umfasst einen faseroptischen Adapter 2. Der faseroptische Adapter 2 weist einen Außenabschnitt 3 und einen Innenabschnitt 4 auf, die durch einen um ein Gehäuse 25 des faseroptischen Adapters 2 umlaufenden Flansch 5 getrennt sind. Weiter weist der faseroptische Adapter 2 eine nicht in Fig. 1 dargestellte erste Anschlusseinrichtung 38 (siehe Fig. 4) innerhalb des Gehäuses 25 des faseroptischen Adapters 2 und eine zweite Anschlusseinrichtung 6 auf. Weiter dargestellt ist eine Befestigungsmutter 7, die auf ein Außengewinde 8 (siehe Fig. 2) des faseroptischen Adapters 2 aufgeschraubt ist. Das Außengewinde 8 kann hierbei als erstes adapterseitiges Befestigungsmittel bezeichnet werden. Weiter weist der faseroptische Adapter 2 ein als Innengewinde 9 ausgebildetes zweites Befestigungsmittel auf.

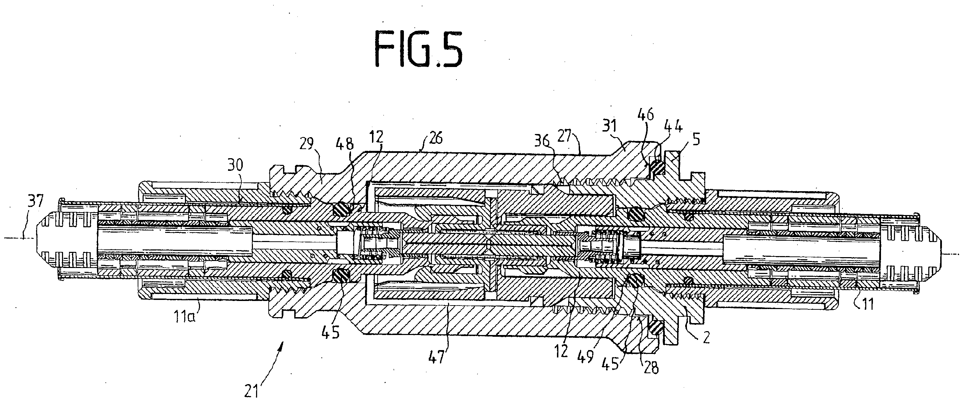

Weiter dargestellt ist ein erstes Glasfaserkabel 10, welches mit einem ersten Anschlussstecker 11 terminiert ist. Der erste Anschlussstecker 11 kann ein widerstandsfähiger Anschlussstecker sein. Der erste Anschlussstecker 11 weist einen Steckerkopf 12 auf, in dem eine Ferrule 22 (siehe Fig. 4) für das erste Glasfaserkabel 10 angeordnet ist. Weiter weist der erste Anschlussstecker 11 eine Befestigungsmutter 13 auf, die einen Außengewindeabschnitt 14 aufweist oder ausbildet. Der erste Anschlussstecker 11 ist durch eine das Innengewinde 9 ausbildende Öffnung in den faseroptischen Adapter 2 einführbar, wobei der Steckerkopf 12 in die nicht dargestellte erste Anschlusseinrichtung 38 eingesteckt wird. Hierfür weist der Steckerkopf 12 Führungselemente 15 auf, die z.B. mit Führungselementen, z.B. Führungsnuten, der ersten Anschlusseinrichtung 38 korrespondieren. Ist der Steckerkopf 12 in die erste Anschlusseinrichtung 38 eingesteckt, so kann durch Rotation der Befestigungsmutter 13 das steckerseitige Außengewinde 14 in das adapterseitige Innengewinde 9 eingeschraubt werden. Weiter dargestellt ist ein Dichtungsring 45, der in Fig. 5 näher erläutert wird.

Ebenfalls dargestellt ist ein zweites Glasfaserkabel 16, welches mit einem zweiten Anschlussstecker 17 terminiert ist. Der zweite Anschlussstecker 17 ist hierbei vom ersten Anschlussstecker 11 verschiedenartig ausgebildet. Der zweite Anschlussstecker 17 weist ebenfalls einen Steckerkopf 18 auf, der eine Ferrule 19 für das zweite Glasfaserkabel 16 umfasst. Der Steckerkopf 18 ist in die zweite Anschlusseinrichtung 6 einsteckbar. Hierzu weist der zweite Anschlussstecker 17 als Führungsstege 20 ausgebildete Führungselemente auf, die mit Führungsschlitzen oder Führungsnuten 23 (siehe Fig. 2) der zweiten Anschlusseinrichtung 6 korrespondieren.

Somit ist mittels des dargestellten faseroptischen Adapters 2 eine mechanische und optische Verbindung zweier verschiedenenartig terminierter Glasfaserkabel 10, 16 herstellbar, wobei Anschlussstecker 11, 17 vorbestimmte Ausrichtungen bei der Verbindung einnehmen.

In Fig. 2 ist eine Explosionszeichnung einer erfindungsgemäßen faseroptischen Verbindungsanordnung 21 dargestellt. Die faseroptische Verbindungsanordnung 21 umfasst den in Fig. 1 dargestellten faseroptischen Adapter 2. Weiter dargestellt ist der erste Anschlussstecker 11, der ebenfalls in Fig. 1 dargestellt ist.

Im Unterschied zu Fig. 1 ist jedoch eine Ferrule 22 des ersten Anschlusssteckers 11 und eine Führungsnut 23 der zweiten Anschlusseinrichtung 6 dargestellt. Auch ist das in Fig. 1 verdeckte Außengewinde 8 des faseroptischen Adapters 2 dargestellt. Hierbei ist ersichtlich, dass das Außengewinde 8 auf einer äußeren Mantelfläche 24 des Gehäuses 25 des faseroptischen Adapters 2 angeordnet ist. Hierbei ist das Außengewinde 8 innenabschnittseitig angeordnet und wird durch einen Flansch 5 begrenzt.

Weiter dargestellt ist eine erfindungsgemäße Adapterhülse 26. Die Adapterhülse 26 weist einen ersten Endabschnitt 27 mit einer ersten Öffnung 28 und einen zweiten Endabschnitt 29 mit einer zweiten Öffnung 30 auf. Durch die erste Öffnung 28 und die zweite Öffnung 30 ist ein nicht dargestelltes Innenvolumen 47 (siehe Fig. 5) der Adapterhülse 26 zugänglich. Hierzu ist die Adapterhülse 26 hohl ausgebildet. Weiter dargestellt ist, dass ein Teil des ersten Endabschnitts 27 als Flansch 31 ausgebildet ist, wobei der Flansch 31 ringförmig von einem Hauptkörper 32 der Adapterhülse 26 hervorsteht. Hierbei ist dargestellt, dass der Flansch 31 an einem äußeren Umfang Abflachungen 33 aufweist, die für eine bessere manuelle Betätigung, insbesondere einer besseren Betätigung zum An- oder Losschrauben der Adapterhülse 26, dienen.

Weiter dargestellt ist, dass der zweite Endabschnitt 29 ein Innengewinde 34 aufweist, wobei das Innengewinde 34 die zweite Öffnung 30 umfasst. Ein Durchmesser der zweiten Öffnung 30 ist hierbei kleiner als ein Durchmesser der ersten Öffnung 28. Die äußeren Abmaße, insbesondere ein Außendurchmesser, der Adapterhülse 26 verjüngt sich vom ersten Endabschnitt 27 hin zum zweiten Endabschnitt 29. Weiter dargestellt ist eine an einem Außenumfang des zweiten Endabschnitts 29 angeordnete Ringnut 35 zur Aufnahme einer Verschlusskappenhalterung (nicht dargestellt). Weiter dargestellt ist ein weiterer erster Anschlussstecker 11a, der gleichartig zum ersten Anschlussstecker 11 ausgebildet ist. Insbesondere weist auch der weitere erste Anschlussstecker 11a eine Befestigungsmutter 13 und ein mit der Befestigungsmutter 13 verbundenes Außengewinde 14 auf.

Ein Nenndurchmesser des hülsenseitigen Innengewindes 34 korrespondiert zu einem Nenndurchmesser des steckerseitigen Außengewindes 14. Somit kann ein Steckerkopf 12 des weiteren ersten Anschlusssteckers 11a durch die zweite Öffnung 30 in das Innenvolumen 47 der Adapterhülse 26 eingeführt werden. Dann kann der erste weitere Anschlussstecker 11a mittels einer rotierenden Betätigung der Befestigungsmutter 13 mittels des Außengewindes 14 mit dem Innengewinde 34 verschraubt werden, so dass eine mechanische Fixierung des ersten weiteren Anschlusssteckers 11a an der Adapterhülse 26 hergestellt wird.

Nicht in Fig. 2 dargestellt ist ein erstes Innengewinde 35 der Adapterhülse 26, welches im ersten Endabschnitt 27 angeordnet ist (siehe z.B. Fig. 4). Ein Nenndurchmesser des ersten Innengewindes 35 korrespondiert zu einem Nenndurchmesser des Außengewindes 8. Somit ist die Adapterhülse 26 mittels der wechselwirkenden Gewinde 8, 35 auf den faseroptischen Adapter 2 aufschraubbar, wobei die zweite Anschlusseinrichtung 6 in dem Innenvolumen 47 der Adapterhülse 26 angeordnet ist. Eine Länge L der Adapterhülse 26 entlang einer zentralen Längsachse 37 der Adapterhülse 26 ist hierbei derart auf eine nicht dargestellte Länge des faseroptischen Adapters 2 und des ersten weiteren Anschlusssteckers 11a abgestimmt, dass bei auf den faseroptischen Adapter 2 aufgeschraubter Adapterhülse 26 der Steckerkopf 12 des ersten weiteren Anschlusssteckers 11a in die zweite Anschlussrichtung 6 eingesteckt werden kann. Hierbei ist zu beachten, dass mittels der zweiten Anschlusseinrichtung 6 eine mechanische Fixierung und Ausrichtung des Steckerkopfes 12 nur unvollständig herstellbar ist. Die mechanische Fixierung des ersten weiteren Anschlusssteckers 11a wird hierbei durch eine Verschraubung des steckerseitigen Außengewindes 14 mit dem hülsenseitigen zweiten Innengewinde 34 unterstützt, wobei bei aufgeschraubter Adapterhülse 26 und eingeschraubtem weiteren ersten Anschlussstecker 11a der Steckerkopf 12 des ersten weiteren Anschlusssteckers 11a eine vorbestimmte Lage und vorzugsweise auch eine vorbestimmte Orientierung innerhalb der zweiten Anschlusseinrichtung 6 einnimmt.

Hierbei ist zu beachten, dass der Flansch 5 als Anschlag für den hülsenseitigen Flansch 31 dient, so dass ein Aufschrauben der Adapterhülse 26 auf den faseroptischen Adapter 2 nur bis zu einem gewissen Maß möglich ist.

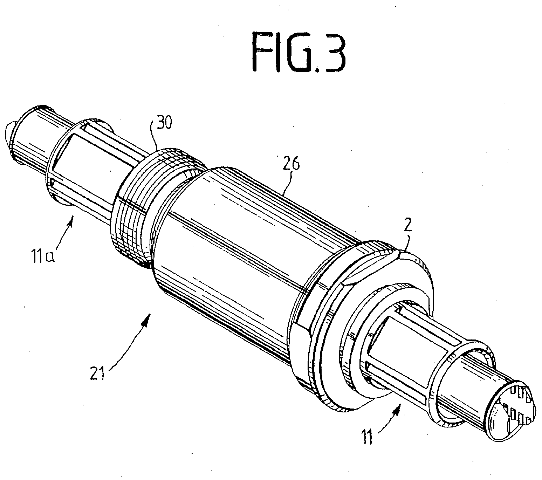

In Fig. 3 ist die in Fig. 2 dargestellte faseroptische Verbindungsanordnung 21 in einem zusammengeschraubten Zustand dargestellt, wobei die Verbindungsanordnung 21 um 180° gedreht dargestellt ist. Hierbei ist der erste Anschlussstecker 11 in eine nicht dargestellte erste Anschlusseinrichtung 38 (siehe Fig. 4) des faseroptischen Adapters 2 eingesteckt und mit dem faseroptischen Adapter 2 verschraubt. Gleichzeitig ist ein erster weiterer Anschlussstecker 11a durch die zweite Öffnung 30 in ein nicht dargestelltes Innenvolumen 47 (siehe Fig. 4) der Adapterhülse 26 eingebracht und in die z.B. in Fig. 1 dargestellte zweite Anschlusseinrichtung 6 eingeführt. Weiter ist der erste weitere Anschlussstecker 11a mit der Adapterhülse 26 verschraubt. Hierdurch wird eine mechanische und optische Verbindung von mit den ersten Anschlusssteckern 11, 11a terminierten Glasfaserkabeln ermöglicht.

Fig. 4 zeigt eine perspektivische Darstellung eines Querschnitts durch die in Fig. 3 dargestellte faseroptische Verbindungsanordnung 21. In Fig. 4 ist eine erste Anschlusseinrichtung 38 dargestellt, in der vorliegend der Steckerkopf 12 des ersten Anschlusssteckers 11 eingesteckt ist. Weiter dargestellt ist die zweite Anschlusseinrichtung 6, in die der Steckerkopf 12 des ersten weiteren Anschlusssteckers 11a eingebracht ist. Es ist ersichtlich, dass Rasthaken 39 der zweiten Anschlusseinrichtung 6 in Rastvertiefungen 40 des Steckerkopfes 12 des ersten weiteren Anschlusssteckers 11a eingreifen. In diesem eingebrachten Zustand des ersten weiteren Anschlusssteckers 11a in die zweite Anschlusseinrichtung 6 sind Führungselemente 15 des ersten weiteren Anschlusssteckers 11a in die Führungsnut 23 der zweiten Anschlusseinrichtung 6 (siehe Fig. 2) eingebracht. Die Führungselemente 15 des ersten weiteren Anschlusssteckers 11a und die Führungsnut 23 der zweiten Anschlusseinrichtung dienen also einer vorbestimmten Ausrichtung des ersten weiteren Anschlusssteckers 11a in der zweiten Anschlusseinrichtung 6. Gleichzeitig ist jedoch eine Außenfläche 41 des Steckerkopfes 12 des ersten weiteren Anschlusssteckers 11a im eingebrachten Zustand beabstandet von einer Innenseite 42 der zweiten Anschlusseinrichtung 6. Im Gegensatz hierzu liegt eine Außenfläche 41 des Steckerkopfes 12 des ersten Anschlusssteckers 11 bündig an einer Innenfläche 43 der ersten Anschlusseinrichtung 38 an. Hierdurch ist der erste weitere Anschlussstecker 11a nur unvollständig in der zweiten Anschlusseinrichtung 6 befestigt, da er bei alleiniger Befestigung mittels der Rasthaken 39 noch verschwenkbar ist. Die Rasthaken 39 und die in Fig. 2 dargestellte Führungsnut 23 dienen hierbei vielmehr einer vorbestimmten und gewünschten Ausrichtung des ersten weiteren Anschlusssteckers 11a in der zweiten Anschlusseinrichtung 6 und nur teilweise dessen mechanischer Fixierung in der zweiten Anschlusseinrichtung 6. Die mechanische Fixierung wird durch eine Verschraubung des steckerseitigen Außengewindes 14 mit dem zweiten hülsenseitigen Innengewinde 30 hergestellt. Somit ist sichergestellt, dass auch in der nicht für eine vollständige mechanische Fixierung eines ersten Anschlusssteckers 11, 11a ausgelegten zweiten Anschlusseinrichtung 6 der erste weitere Anschlussstecker 11a in einer vorbestimmten Ausrichtung mechanisch fixiert angeordnet werden kann. Hierdurch kann ein gewünschter Abstand und eine definierte Ausrichtung von Ferrulen 22 der ersten Anschlussstecker 11, 11a erreicht werden.

Weiter dargestellt sind Dichtringe 44, 45, die nachfolgend näher erläutert werden.

In Fig. 5 ist ein Querschnitt durch die in Fig. 3 dargestellte faseroptische Verbindungsanordnung 21 dargestellt. Hierbei sind ein erster Dichtring 44 und zweite Dichtringe 45 dargestellt. Der hülsenseitige Flansch 31 bildet eine ringförmige Auflagefläche 46 aus, die an einem äußeren Umfang der ersten Dichtfläche 46 von dem ersten Flansch 31 begrenzt wird. In dem das erste Innengewinde 36 und den Flansch 31 umfassenden Endabschnitt 27 ist die erste Öffnung 28 mit einem treppenförmigen Querschnitt eingebracht. Die Dichtfläche 46 ist hierbei in einer Ebene angeordnet, die senkrecht zu der zentralen Längsachse 37 der Adapterhülse 26 verläuft. Die Dichtfläche 46 weist hierbei einen vorbestimmten Innen- und einen vorbestimmten Außendurchmesser auf. Wird die Adapterhülse 26 auf den faseroptischen Adapter 2 aufgeschraubt, so wird der Dichtring 44 zwischen der hülsenseitigen Dichtfläche 46 und den adapterseitigen Flansch 5 gepresst, wodurch ein Innenvolumen 47 der Adapterhülse 26 im Bereich der Verbindung zwischen Adapterhülse 26 und faseroptischen Adapter 2 fluiddicht abgedichtet ist.

An den ersten Anschlusssteckern 11, 11a sind die Dichtringe 45 angeordnet. Beim Einschrauben des ersten weiteren Anschlusssteckers 11a in die zweite Öffnung 30 der Adapterhülse 26 wird der Dichtring 45 zwischen eine weitere Dichtfläche 48 der Adapterhülse 26 und den Steckerkopf 12 des ersten weiteren Anschlusssteckers 11a gepresst. Hierfür ist ein Innendurchmesser zumindest eines Teils des zweiten Endabschnitts 29 der Adapterhülse 26 derart zu wählen, dass dieser kleiner ist als ein Außendurchmesser des Dichtrings 45, der auf dem ersten weiteren Anschlussstecker 11a angeordnet ist. Hierdurch wird in vorteilhafter Weise erreicht, dass das Innenvolumen 47 der Adapterhülse 26 bei einem eingeschraubten ersten weiteren Anschlussstecker 11a fluiddicht abgedichtet ist. Analog hierzu erfolgt eine fluiddichte Abdichtung mittels des Dichtrings 45, der an dem ersten Anschlussstecker 11 angeordnet ist. Hierbei weist der faseroptische Adapter 2 eine Dichtfläche 49 im Bereich der ersten Anschlusseinrichtung 38 auf. Beim Einschrauben des ersten Anschlusssteckers 11 in das Innengewinde 9 des faseroptischen Adapters 2 wird der Dichtring 45 zwischen die Dichtfläche 49 und den Steckerkopf 12 des ersten Anschlusssteckers 11 gepresst.

Der erste Endabschnitt 27 ist hierbei entlang einer zentralen Längsachse 37 der Adapterhülse 26 gegenüberliegend dem zweiten Endabschnitt 29 angeordnet.

Der Teil des zweiten Endabschnitts 29, an welchem der Dichtring 45 im eingeschraubten Zustand des ersten weiteren Anschlusssteckers 11a anliegt, kann als weitere Dichtungsfläche 48 der Adapterhülse 26 bezeichnet werden.

### Bezugszeichenliste

- 1: faseroptische Verbindungsanordnung
- 2: faseroptischer Adapter
- 3: Außenabschnitt
- 4: Innenabschnitt
- 5: Flansch
- 6: zweite Anschlusseinrichtung
- 7: Befestigungsmutter
- 8: Außengewinde
- 9: Innengewinde
- 10: erstes Glasfaserkabel
- 11: erster Anschlussstecker
- 12: Steckerkopf
- 13: Befestigungsmutter
- 14: Außengewinde
- 15: Führungselement
- 16: zweites Glasfaserkabel
- 17: zweiter Anschlussstecker
- 18: Steckerkopf
- 19: Ferrule
- 20: Führungssteg
- 21: faseroptische Verbindungsanordnung
- 22: Ferrule
- 23: Führungsnut
- 24: Außenmantel
- 25: Gehäuse
- 26: Adapterhülse
- 27: erster Endabschnitt
- 28: erste Öffnung
- 29: zweiter Endabschnitt
- 30: zweite Öffnung
- 31: Flansch
- 32: Hauptkörper
- 33: Abflachung
- 34: Innengewinde
- 35: Ringnut
- 36: Innengewinde
- 37: zentrale Längsachse
- 38: erste Anschlusseinrichtung
- 39: Rasthaken
- 40: Rastvertiefung
- 41: Außenfläche des ersten weiteren Anschlusssteckers
- 42: Innenfläche
- 43: Innenfläche der ersten Anschlusseinrichtung
- 44: Dichtring
- 45: Dichtring
- 46: erste Dichtfläche
- 47: Innenvolumen
- 48: weitere Dichtfläche
- 49: Dichtfläche

## Patentansprüche

1. Faseroptische Verbindungsanordnung, wobei die Verbindungsanordnung (21) einen faseroptischen Adapter (2) umfasst, wobei der faseroptische Adapter (2) eine erste Anschlusseinrichtung (38) für einen ersten Anschlussstecker (11) und eine zweite Anschlusseinrichtung (6) für einen zweiten Anschlussstecker (17) aufweist, wobei die erste und die zweite Anschlusseinrichtung (38, 6) verschieden sind, wobei der faseroptische Adapter (2) mindestens ein erstes adapterseitiges Befestigungsmittel aufweist, wobei das erste adapterseitige Befestigungsmittel als Außengewinde (8) mit einem ersten adapterseitigen Nenndurchmesser ausgebildet ist,
wobei die Verbindungsanordnung (21) weiter eine Adapterhülse (26) umfasst, wobei die Adapterhülse (26) einen ersten Endabschnitt (27) mit einer ersten Öffnung (28) und einen zweiten Endabschnitt (29) mit einer zweiten Öffnung (30) aufweist, wobei der erste Endabschnitt (27) ein erstes hülsenseitiges Befestigungsmittel aufweist, wobei das erste hülsenseitigen Befestigungsmittel als erstes Innengewinde (36) ausgebildet ist, wobei das erste Innengewinde (36) einen ersten hülsenseitigen Nenndurchmesser aufweist,
wobei der erste hülsenseitige Nenndurchmesser zu dem ersten adapterseitigen Nenndurchmesser korrespondiert, wobei die Adapterhülse (26) derart auf das adapterseitige Außengewinde (8) aufgeschraubt ist, dass zumindest die zweite Anschlusseinrichtung (6) in einem Innenvolumen (47) der Adapterhülse (26) angeordnet ist, **dadurch gekennzeichnet, dass**
der zweite Endabschnitt (29) ein zweites hülsenseitiges Befestigungsmittel aufweist, wobei das zweite hülsenseitige Befestigungsmittel zur Befestigung eines ersten Anschlusssteckers (11, 11a) an der Adapterhülse (26) ausgebildet ist und der faseroptische Adapter (2) ein zweites adapterseitiges Befestigungsmittel aufweist, wobei das zweite adapterseitige Befestigungsmittel als Innengewinde (9) mit einem zweiten adapterseitigen Nenndurchmesser ausgebildet ist, wobei das zweite hülsenseitige Befestigungsmittel als zweites Innengewinde (34) mit einem zweiten hülsenseitigen Nenndurchmesser ausgebildet ist, wobei der zweite adapterseitige Nenndurchmesser gleich dem zweiten hülsenseitigen Nenndurchmesser ist.

2. Faseroptische Verbindungsanordnung nach Anspruch 1, **dadurch gekennzeichnet, dass** die Verbindungsanordnung (21) zusätzlich ein Dichtungsmittel umfasst, wobei das Dichtungsmittel (44) das Innenvolumen (47) der Adapterhülse (26) im Bereich der ersten Öffnung (28) der Adapterhülse (26) fluiddicht abdichtet.

3. Faseroptische Verbindungsanordnung nach einem der Ansprüche 1 oder 2, **dadurch gekennzeichnet, dass** der erste Endabschnitt (27) der Adapterhülse (26) eine erste Dichtfläche (46) ausbildet.

4. Faseroptische Verbindungsanordnung nach einem der Ansprüche 1 bis 3, **dadurch gekennzeichnet, dass** der zweite Endabschnitt (29) der Adapterhülse (26) eine weitere Dichtfläche (48) ausbildet.

5. Faseroptische Verbindungsanordnung nach einem der Ansprüche 1 bis 4, **dadurch gekennzeichnet, dass** mindestens am zweiten Endabschnitt (29) der Adapterhülse (26) Markierungselemente und/oder Führungsmittel angeordnet sind.

6. Faseroptische Verbindungsanordnung nach einem der Ansprüche 1 bis 5, **dadurch gekennzeichnet, dass** die erste Anschlusseinrichtung (38) eine Anschlusseinrichtung für DLX-Stecker und/oder die zweite Anschlusseinrichtung (6) eine Anschlusseinrichtung für SC-Stecker ist.

## Claims

1. A fiber-optic connection arrangement, with the connection arrangement (21) comprising a fiber-optic adapter (2), with the fiber-optic adapter (2) having a first collecting device (38) for a first connecting plug (11) and a second connecting device (6) for a second connecting plug (17), with the first and the second connecting devices (38, 6) being different, with the fiber-optic adapter (2) having at least one first adapter-side attachment means, with the first adapter side attachment means being in the form of an external thread (8) with a first adapter-side nominal diameter, wherein the connection arrangement (21) furthermore comprises an adapter sleeve (26) with the adapter sleeve (26) having first end section (27) with a first opening (28), and a second end section (29) with a second opening (30), with the first end section (27) having a first sleeve-side attachment means, with the first sleeve-side attachment means being in the form of a first internal thread (36), with the first internal thread (36) having a first sleeve-side nominal diameter,
with the first sleeve-side nominal diameter corresponding to the first adapter-side nominal diameter, with the adapter sleeve (26) being screwed onto the adapter-side external thread (8) such that at least the second connecting device (6) is arranged in an internal volume (47) in the adapter sleeve (26),
**characterized in that** the second end section (29) has a second sleeve side attachment means or a sleeve-side connecting device, wherein the second sleeve-side attachment means is designed for attachment of a first connecting plug (11, 11a) to the adapter sleeve (26) and the fiber-optic adapter (2) has a second adapter side attachment means, wherein the second adapter-side attachment means is in the form of an internal thread (9) with a second adapter-side nominal diameter, with the second sleeve-side attachment means being in in the form of a second internal thread (34) with a second sleeve-side nominal diameter, with the second adapter-side nominal diameter being the same as the second sleeve-side nominal diameter.

2. The fiber-optic connection arrangement as claimed in claim 1, wherein the connection arrangement (21) additionally comprises a sealing means, with the sealing means (44) sealing the internal volume (47) of the adapter sleeve (26) in a fluid-tight manner in the area of the first opening (28) in the adapter sleeve (26).

3. The fiber-optic connection arrangement as claimed in claim 1 or 2, wherein the first end section (27) of the adapter sleeve (26) forms a first sealing surface (46).

4. The fiber-connection arrangement as claimed in one of the foregoing claims 1 to 3, wherein the second end section (29) of the adapter sleeve (26) forms a further sealing surface (48).

5. The fiber-optic connection arrangement as claimed in one of the foregoing claims 1 to 4, wherein marking elements and/or guide means are arranged at least on the second end section (29) of the adapter sleeve (26).

6. The fiber-optic connection arrangement as claimed in one the foregoing claims 1 to 5, wherein the first connecting device (38) is a connecting device (6) for DLX plugs, and/or the second connecting device is a connecting device for SC plugs.

## Revendications

1. Arrangement de liaison optique à fibres, l'arrangement de liaison (21) comprenant un adaptateur optique à fibres (2), l'adaptateur optique à fibres (2) possédant un premier dispositif de raccordement (38) pour une première fiche de raccordement (11) et un deuxième dispositif de raccordement (6) pour une deuxième fiche de raccordement (17), les premier et deuxième dispositifs de raccordement (38, 6) étant différents, l'adaptateur optique à fibres (2) possédant au moins un premier moyen de fixation côté adaptateur, le premier moyen de fixation côté adaptateur étant réalisé sous la forme d'un filetage mâle (8) ayant un premier diamètre nominal côté adaptateur,
l'arrangement de liaison (21) comprenant en outre une douille d'adaptation (26), la douille d'adaptation (26) possédant une première une première portion d'extrémité (27) pourvue d'une première ouverture (28) et une deuxième portion d'extrémité (29) pourvue d'une deuxième ouverture (30), la première portion d'extrémité (27) possédant un premier moyen de fixation côté douille, le premier moyen de fixation côté douille étant réalisé sous la forme d'un premier filetage femelle (36), le premier filetage femelle (36) possédant un premier diamètre nominal côté douille,
le premier diamètre nominal côté douille correspondant au premier diamètre nominal côté adaptateur, la douille d'adaptation (26) étant vissée sur le filetage mâle (8) côté adaptateur de telle sorte qu'au moins le deuxième dispositif de raccordement (6) est disposé dans le volume interne (47) de la douille d'adaptation (26), **caractérisé en ce que**
la deuxième portion d'extrémité (29) possède un deuxième moyen de fixation côté douille, le deuxième moyen de fixation côté douille étant configuré pour la fixation de la première fiche de raccordement (11, 11a) à la douille d'adaptation (26) et l'adaptateur optique à fibres (2) possédant un deuxième moyen de fixation côté adaptateur, le deuxième moyen de fixation côté adaptateur étant réalisé sous la forme d'un filetage femelle (9) ayant un deuxième diamètre nominal côté adaptateur, le deuxième moyen de fixation côté douille étant réalisé sous la forme d'un deuxième filetage femelle (34) ayant un deuxième diamètre nominal côté douille, le deuxième moyen de fixation côté adaptateur étant identique au deuxième diamètre nominal côté douille.

2. Arrangement de liaison optique à fibres selon la revendication 1, **caractérisé en ce que** l'arrangement de liaison (21) comprend en outre un moyen d'étanchéité, le moyen d'étanchéité (44) rendant étanche le volume interne (47) de la douille d'adaptation (26) dans la zone de la première ouverture (28) de la douille d'adaptation (26).

3. Arrangement de liaison optique à fibres selon l'une des revendications 1 ou 2, **caractérisé en ce que** la première portion d'extrémité (27) de la douille d'adaptation (26) forme une première surface d'étanchéité (46) .

4. Arrangement de liaison optique à fibres selon l'une des revendications 1 à 3, **caractérisé en ce que** la deuxième portion d'extrémité (29) de la douille d'adaptation (26) forme une surface d'étanchéité supplémentaire (48) .

5. Arrangement de liaison optique à fibres selon l'une des revendications 1 à 4, **caractérisé en ce que** des éléments de marquage et/ou des moyens de guidage sont disposés au moins au niveau de la deuxième portion d'extrémité (29) de la douille d'adaptation (26).

6. Arrangement de liaison optique à fibres selon l'une des revendications 1 à 5, **caractérisé en ce que** le premier dispositif de raccordement (38) est un dispositif de raccordement pour une fiche DLX et/ou le deuxième dispositif de raccordement (6) est un dispositif de raccordement pour une fiche SC.
